# EUROPÄISCHE PATENTSCHRIFT

(11) **EP 2 038 438 B1**
(45) Veröffentlichungstag und Bekanntmachung des Hinweises auf die Patenterteilung: **12.10.2011**
(21) Anmeldenummer: 07786913.9
(22) Anmeldetag: 29.06.2007
(51) Int. Cl.: C22B 23/02

(54) **RECYCLING VON SUPERLEGIERUNGEN UNTER VERWENDUNG EINER ALKALIMETALL- SALZSCHMELZE**
RECYCLING OF SUPERALLOYS WITH THE AID OF AN ALKALI METAL SALT BATH
RECYCLAGE DE SUPERALLIAGES AU MOYEN D'UN BAIN DE SELS FONDUS CONTENANT DES MÉTAUX ALCALINOTERREUX

(30) Priorität: 30.06.2006 DE 102006030731
(43) Veröffentlichungstag der Anmeldung: 25.03.2009
(73) Patentinhaber: H.C. Starck GmbH, 38642 Goslar (DE)
(72) Erfinder: OLBRICH, Armin, 38723 Seesen (DE); MEESE-MARKTSCHEFFEL, Juliane, 38642 Goslar (DE); JAHN, Matthias, 38642 Goslar (DE); ZERTANI, Rüdiger, 38642 Goslar (DE); STOLLER, Viktor, 38667 Bad Harzburg (DE); ERB, Michael, 38259 Salzgitter (DE); HEINE, Karl-Heinz, 38690 Vienenburg (DE); KUTZLER, Uwe, 38690 Vienenburg (DE)
(86) Internationale Anmeldenummer: PCT/EP2007/056527
(87) Internationale Veröffentlichungsnummer: WO 2008/000810

(56) Entgegenhaltungen:
- DE-C1- 19 521 333
- US-A- 4 320 094
- US-A- 4 521 381
- US-A- 4 557 906

## Beschreibung

Die vorliegende Erfindung betrifft ein Verfahren zum Aufschluss von Superlegierungen, insbesondere Superlegierungsschrotten in einer Salzschmelze und anschließender Rückgewinnung der Wertmetalle.
Superlegierungen sind komplex zusammengesetzte hochtemperaturbeständige Legierungen auf Nickel- und Kobalt-Basis, mit Zusätzen von anderen Metallen, wie zum Beispiel, Aluminium, Chrom, Molybdän, Wolfram, Tantal, Niob, Mangan, Rhenium, Platin, Titan, Zirkonium und Hafnium, sowie Nichtmetallen wie Bor und/oder Kohlenstoff. Die Superlegierungen stellen hochfeste und besonders verschleißfeste Legierungen dar, die im Motoren- und Triebwerkbau, in der Energietechnik sowie in Luft- und Raumfahrt angewendet werden. Die besonderen Eigenschaften dieser Legierungen werden erreicht insbesondere durch die Zugabe von seltenen und edlen Metallen wie Rhenium, Tantal, Niobium oder sogar Platin. Ein guter Überblick über die Zusammensetzung, Eigenschaften und Anwendungsgebiete der Superlegierungen befindet sich in Ullmannn's Encyclopedia of Industrial Chemistry, Volume A13, Fifth Edition, 1989, Seiten 55-65 und in der Kirk-Othmer Encyclopedia of Techology, Volume 12, Forth Edition, Seiten 417-458.
Die Superlegierungen unterscheiden sich von den üblichen hochschmelzenden Legierungen, z. B. W-Re Legierungen oder Mo-Re Legierungen durch ihre besondere Oxidations- bzw. Korrosionsbeständigkeit. So werden Bauteile aus Superlegierungen wegen ihrer ausgezeichneten Oxidationsstabilität bei der Herstellung von Schaufeln in Flugzeugturbinen eingesetzt. Nach Ablauf der Nutzungsdauer stellen solche Teile eine wichtige Rohstoffquelle für die Gewinnung von seltenen Metallen, insbesondere von Rhenium, Tantal, Niob, Wolfram, Molybdän und Platin dar.
Die Rückgewinnung der Legierungsmetalle der Superlegierungen ist aufgrund des hohen Anteils teurer Metalle wirtschaftlich sehr interessant. So enthalten spezielle Superlegierungen die Metalle Rhenium von bis zu 12 Gew. %, Tantal bis zu 12 Gew. %, Niob bis zu 5 Gew. % und Wolfram und Molybdän bis zu 12 Gew. %. Weitere Metalle, die als Basismetalle in den Superlegierungen dienen, sind Nickel und Cobalt. Die Superlegierungen stellen auch für die letztgenannten Metalle eine Rohstoffquelle dar, aus der die Rückgewinnung dieser Metalle wirtschaftlich sinnvoll ist.

Zur Rückgewinnung der metallischen Komponenten aus Superlegierungen sind eine ganze Reihe von hydro- bzw. pyrometallurgischen sowie elektrochemischen Verfahren bekannt, die wegen ihrer komplexen Ausführungsformen und hohen Energieaufwandes keine Verfahren darstellen, die unter wirtschaftlichen Gesichtspunkten, vor allem aufgrund immer weiter steigender Energiepreise, nicht in größerem Umfang durchgeführt werden.
Nach dem Stand der Technik zur Rückgewinnung der metallischen Komponenten aus den Superlegierungen werden diese unter Schutzgasatmosphäre geschmolzen und anschließend zu einem feinteiligen Pulver verdüst. Bei dieser Verfahrensweise ist nachteilig, dass die Superlegierungen erst bei hohen Temperaturen zwischen 1200 und 1500°C schmelzen. Der eigentliche Aufschluss der Superlegierung erfolgt erst in einem zweiten Schritt durch Behandlung des erhaltenen Pulvers mit Säuren. Erfahrungsgemäß werden hierfür mehrere Tage benötigt. Nach einem anderen Verfahren werden die stückförmigen Superlegierungsschrotte nach vorheriger Versprödung, z. B. bei tiefen Temperaturen zunächst durch energieintensive Mahlverfahren zerkleinert und anschließend auf nasschemischem Weg bei erhöhten Temperaturen in Mineralsäuren bestimmter Konzentration und Zusammensetzung aufgeschlossen, Potter et al, Eff. Technol. Recycling Metal 1971, S. 35ff.
Es sind weiterhin einige Verfahren bekannt, die den Aufschluss von Superlegierungsschrotten über elektrochemische Prozesse vorsehen.
Nach US 3649487 werden die in Schrotten einer Fe/Ni/Co/Cu-Basislegierung enthaltenden hochschmelzenden Metalle z.B. Wolfram, Molybdän und Chrom zunächst über ein Schmelzverfahren durch Zusatz von nichtmetallischen Verbindungen der Gruppe III, IV, oder V in Boride, Carbide, Nitride, Silizide oder Phosphide überführt, zu Anoden geschmolzen und anschließend einer anodischen Oxidation unterzogen. Dabei gehen solche Metalle wie Co, Ni und Cu zunächst in Lösung und werden aus dieser an der Kathode abgeschieden, während die hochschmelzende Metalle z. B. als Boride, Carbide etc. im Anodenschlamm zurückbleiben. Hier wird zwar offenbart, dass die Metalle Ni, Co, Cu von den hochschmelzenden Metallen wie W, Mo, oder Chrom abgetrennt werden, es fehlen jedoch sämtliche Angaben darüber, ob eine vollständige Trennung dieser Metalle stattfindet. Die Schrift macht ferner keine Angaben über die Wirtschaftlichkeit des Verfahrens.
WO 96/14440 beschreibt ein Verfahren zum elektrochemischen Aufschluss von Superlegierungen durch anodische Oxidation der Legierung in einem Elektrolysebad mit einer organischen Lösemittelkomponente. Die Schrift offenbart, dass der Elektrolytlösung bis zu 10 % Wasser hinzugefügt werden können, damit das Verfahren noch erfindungsgemäß ausführbar ist. Anderenfalls kommt es dabei zur Passivierung der Anode durch Bildung eines Gels oder einer fest haftenden Oxidschicht , was zum Abbruch der Elektrolyse führen kann. Die Aufarbeitung und Trennung der Wertstoffe aus der durch die Elektrolyse entstehenden Suspension erfolgt zunächst durch die Filtration. Der dabei abgetrennte, einen Teil der Legierungsmetalle enthaltende Filtrationsrückstand wird dann thermisch über Calcination und anschließend nach den üblichen hydrometallurgischen Verfahren weiter aufgearbeitet.
In DE 10155791 C1 wird ebenfalls ein elektrochemisches Aufschlussverfahren für Superlegierungen offenbart. Bei diesem Prozess werden die Superlegierungen zunächst zu Platten gegossen und anschließend in einer sauerstofffreien anorganischen Säure elektrolytisch aufgeschlossen. Dem Problem der anodischen Passivierung wird hier durch Umpolung der Elektroden begegnet. Die beiden letztgenannten Verfahren sind nur unter bestimmten Randbedingungen, insbesondere sehr hohen Rheniumgehalten in Superlegierungen wirtschaftlich umsetzbar.
Ein pyrometallurgisches Aufschlussverfahren von Refraktärmetallen aus Superlegierungen ist aus US-A-4 320 094 bekannt. Gemäß diesem Verfahren wird die Superlegierung unter oxidierenden Bedingungen in Gegenwart eines sauerstofrhaltigen Gases und eines Alkalimctallcarbonats, Alkalimetallhydrogencarbonats oder Alkalimetallhydroxids kalziniert. In einem nachfolgenden hydrometallurgischen Trennungsverfahren wird das im pyrometallurgischen Aufschluss erhaltene Reaktionsprodukt in Wasser überführt. Die resultierende wässrige Lösung enthält die löslichen Alkalimetallmetallate (also Chromate, Molybdate, Wolframate, Niobate und Tantalate, sofern in der Superlegierung vorhanden), wohingegen etwaige Eisen-, Nickel-, Kobalt- oder Kupferanteile der Superlegierung als unlösliche Oxide anfallen und von der Lösung abgetrennt werden können.
In DE 19521333 C1 wird ein pyrometallurgischer Aufschluss von wolframhaltigen Hartmetall- sowie Schwermetallschrotten offenbart. Der Aufschluss findet bei Temperaturen zwischen 800 und 1000°C in einer Salzschmelze, die aus NaOH und Na₂SO₄ besteht, statt. Bei diesen Verfahren wird eine Natriumwolframat - Schmelze erzeugt, die nach anschließender Abkühlung im Wasser gelöst wird.
Wie in der vorliegenden Erfindung wird dort in alkalischer, sulfathaltiger Schmelze Wolfram-Hartmetallschrott unter oxidierenden Bedingungen nahezu vollständig durch Bildung von Natriumwolframat aufgeschlossen. Dies verwundert nicht, da sich das Metallat durch hohe Stabilität auszeichnet und unter den Reaktionsbedingungen in der NaOH-Schmelze löst. So ist ein vollständiger Auflösungsprozess des Hartmetallschrottes gewährleistet.
Schließlich sind in US-A-4 557 906 und US-A-4 521 381 Verfahren zur Rückgewinnung von Rhenium aus wolframhaltigen Werkstoffen beschrieben. Zum Aufschließen wird der Werkstoff mit Natriumhydroxid und einem Oxidationsmittel - vorzugsweise Natriumnitrat, Natriumnitrid, Natriumchlorat oder Natriumperoxid - zur Reaktion gebracht und das Reaktionsprodukt in Wasser gelöst. Die sowohl Wolfram als auch Rhenium enthaltende Lösung wird durch eine Schüttung aus stark basischem Anionenaustauscherharz hindurch geleitet, wobei der überwiegende Anteil des Rheniums am Harz adsorbiert wird. Durch Spülen des Ionenaustauscherharzes mit einer sauren Spülflüssigkeit wird das adsorbierte Rhenium als Perrheniumsäure in die flüssige Phase überführt. US-A-4 521 381 schlägt hierbei die Verwendung einer organischen Spülflüssigkeit aus Tributylphosphat und Salzsäure vor, um die Rheniumkonzentration in der im letzten Schritt benötigten Säure erhöhen zu können.

Aufgabe dieser Erfindung war es, ein Verfahren zum Aufschluss und Recycling von Superlegierungen, insbesondere rheniumhaltiger Superlegierungsschrotte, Aufarbeitung zur Rückgewinnung der darin enthaltenden Wertstoffe als eine kostengünstigere Alternative zum Recycling durch anodische Oxidation oder Säureaufschluss zur Verfügung zu stellen.

Die Aufgabe wurde gelöst durch ein Verfahren zur Rückgewinnung von Wertmetallen aus Superlegierungen wobei die Superlegierungen in einer Salzschmelze bestehend aus 60-95 Gew.% NaOH und 5-40 Gew.% Na₂SO₂ aufgeschlossen werden,
wobei
Superlegierungen als Hauptkomponente eines oder mehrere der Metalle aus der Gruppe, Ni, Co, Cr oder Al und als Nebenkomponente eines oder mehrere der Elemente aus der Gruppe Re, Mo, Ta, Nb, W, Hf oder Pt enthält, wobei in der Schmelze drei Fraktionen bestehend aus
   - in Wasser löslichen Alkalioxometaliaten der Metalle der 6. und/oder 7. Nebengruppe und/oder der 3. Hauptgruppe des Periodensystems und/oder deren Mischungen;
   - in Wasser unlöslichen Komponenten aus der Gruppe der Metalle Co, Ni, Fe, Mn oder Cr und oder deren Mischungen;
   - Oxiden und/oder in Wasser unlöslichen Alkalioxometallate der Metalle der 4. oder 5. Nebengruppe des Periodensystems und/oder deren Mischungen vorgebildet werden.

Der dabei gebildete Schmelzaufschluss wird anschließend hydrometallurgisch mit dem Ziel der einfachen Trennung der einzelnen Wertmetalle aufgearbeitet. Bevorzugt wird der Aufschluss in einer Salzschmelze bestehend aus 65-85 Gew.% NaOH und 15-35 Gew.% Na₂SO₄, besonders bevorzugt aus 70-80 Gew.% NaOH und 20-30 Gew.% Na₂SO₄ durchgeführt.

Im Falle von Superlegierungen, mit deren Aufschluss sich die vorliegende Erfindung beschäftigt, bilden mehr als über 50% der metallischen Bestandteile z. B. Nickel oder Cobalt unter den Rektionsbedingungen der DE 19521333 C1 keine Metallate und es war überraschend, dass ein entsprechender Aufschluss überhaupt stattfinden konnte. Weiterhin war es überraschend, dass praktisch das gesamte Nickel und Cobalt nach dem Aufschluss in metallischer Form vorlag und somit eine besonders vorteilhafte Aufarbeitung des Schmelzaufschlusses unter Nutzung einer magnetischen Trennung möglich wurde. Nicht zuletzt hieraus ergibt sich ein deutlicher wirtschaftlicher Vorteil gegenüber den zitierten elektrochemischen Aufschlussverfahren für Superlegierungen. Superlegierungen gemäß der vorliegenden Erfindung sind Legierungen, die als Hauptkomponenten 50 bis 80 % Nickel, 3 bis 15 Gew. % mindestens eines oder mehrerer der Elemente Cobalt, Chrom und gegebenenfalls Aluminium, sowie 1 bis 12 Gew. % eines oder mehrerer der Elemente Rhenium, Tantal, Niob, Wolfram, Molybdän, Hafnium und Platin enthalten.

Das erfindungsgemäße Verfahren eignet sich insbesondere für rheniumhaltige Superlegierungen, die bis zu 12 Gew. % Rhenium enthalten. Der erfindungsgemäße Aufschluss von Superlegierungen wird vorteilhaft so durchgeführt, dass in die Salzschmelze bis zu 10 Gew.%, bevorzugt bis zu 8 Gew.% und besonders bevorzugt bis zu 5 % Soda (Na₂CO₃) bezogen auf das Gewicht der Salzschmelze hinzugefügt werden.
Vorteilhafte Zusammensetzungen der Salzschmelze sind in der Tabelle 1 zusammengeführt.

**Tabelle 1.**

| Gew.% NaOH | Gew.% Na₂SO₄ | Gew.% Na₂CO₃ |
|---|---|---|
| 85 | 5 | 10 |
| 80 | 10 | 10 |
| 70 | 25 | 5 |
| 80 | 15 | 5 |
| 75 | 20 | 5 |
| 72 | 20 | 8 |

Die Superlegierungen können sowohl stückförmig als auch pulverförmig (Grindings oder Schleifstäube) vorliegen.
Der Superlegierungsaufschluss kann sowohl in direkt beheizten, z.B. in Öfen mit Gas- bzw. Ölbefeuerung als auch in indirekt beheizten Öfen kontinuierlich oder chargenweise durchgeführt werden. Die dafür geeigneten Öfen sind z. B. Trommelöfen und Drehrohröfen.
Bevorzugt wird dabei der Aufschluss von Superlegierungen in einer bewegten alkalischen Schmelze in einem chargenweise betriebenen direkt befeuerten Drehrohrofen durchgeführt.
Der erfindungsgemäße Aufschluss wird so durchgeführt, daß auf 1 kg Superlegierung mindestens 1 kg Salzschmelze, bevorzugt mindestens 1,5 kg und besonders bevorzugt mindestens 2 kg eingesetzt werden. Bei bestimmten Superlegierungen, die Rhenium-Gehalte von größer als 8 % aufweisen, werden bis zu 5 kg Salzschmelze je Kilogramm Superlegierung eingesetzt.
Der erfindungsgemäße Aufschluss von Superlegierungen verläuft im Hinblick auf die Raum-Zeit-Ausbeute besonders vorteilhaft, wenn in die Salzschmelze Luft und/oder Sauerstoff, oder deren Gemisch eingeleitet wird. Vorzugsweise wird in die Salzschmelze ein Gemisch aus Luft und Sauerstoff bestehend aus 25 bis 95 Vol. % Luft und 5 bis 75 Vol.% Sauerstoff, bevorzugt aus 35 bis 80 Vol. % Luft und 20 bis 65 Vol. % Sauerstoff eingeleitet.
Der erfindungsgemäße Aufschluss von Superlegierungen wird bei Temperaturen von 800 bis 1200°C durchgeführt. Bevorzugt wird der Aufschluss im Temperaturbereich von 850 bis 1100°C, besonders bevorzugt bei 900 bis 1050°C durchgeführt. Gute Aufschlussbedingungen liegen vor, wenn in die Schmelze zusätzlich Oxidationsmittel eingeführt werden. Als solche können z.B. Nitrate, Peroxodisulfate, Peroxide der Alkalimetalle und /oder deren Mischungen dienen. Vorteilhaft werden Kaliumnitrat, Natriumnitrat, Natriumperoxid, Kaliumperoxid, Natriumperoxidisulfat, Kaliumperoxidisulfat und/oder deren Mischungen als Oxidationsmittel eingesetzt. Besonders gute Aufschlussraten werden erreicht, wenn der Schmelze 5 bis 25 Gew.-% der oxidierenden Komponente bezogen auf das Gewicht der Schmelze hinzugefügt werden.
Vorteilhafte Zusammensetzungen der Salzschmelze können der Tabelle 2 entnommen werden.

**Tabelle 2.**

| Gew.% NaOH | Gew.% Na₂SO₄ | Gew.% Na₂CO₃ | Gew.% Oxidationsmittel |
|---|---|---|---|
| 70 | 10 | - | 20 (NaNO₃) |
| 77 | 5 | - | 18 (K₂S₂O₈) |
| 80 | 5 | 5 | 10 (Na₂O₂) |
| 60 | 20 | 8 | 6 (NaNO₃) |
| | | | 6 (Na₂S₂O₈) |
| 85 | 10 | - | 5 (Na₂O₂) |

Besonders vorteilhaft wird dabei der Schmelzaufschluss so durchgeführt, dass eine partielle Oxidation der Superlegierung erfolgt oder nach nahezu vollständiger Oxidation für eine bestimmte Zeit reduzierende Bedingungen eingestellt werden. Bei dem erfindungsgemäßen Aufschlussverfahren werden bereits in der Schmelze drei Fraktionen vorgebildet, bestehend aus:
- in Wasser löslichen Alkalioxometallaten der Metalle der 6. und/oder 7.
   Nebengruppe und/oder der 3. Hauptgruppe des Periodensystems und/oder deren Mischungen;
- in Wasser unlöslichen Komponenten aus der Gruppe der Metalle Co, Ni,
   Fe, Mn oder Cr und/oder deren Mischungen,
- Oxiden und/oder in Wasser unlöslichen Alkalioxometallate der Metalle der 4.
   oder 5. Nebengruppe des Periodensystems und/oder deren Mischungen

Diese drei Fraktionen werden anschließend hydrometallurgisch aufgearbeitet. Gegenstand der vorliegenden Erfindung ist somit ein Verfahren zur Aufarbeitung des Superlegierungsschmelzaufschlusses enthaltend folgende Schritte:
a) Überführung des Schmelzaufschlusses in feste Phase durch Abkühlung auf Raumtemperatur,
b) Zerkleinerung des erstarrten Schmelzaufschlusses,
c) Umsetzung des zerkleinerten Schmelzaufschlusses in Wasser bei Temperaturen von kleiner 80°C und Erzeugung einer wässrigen Suspension enthaltend
   - eine Lösung, bestehend aus einer Mischung von Natriumverbindungen aus der Gruppe NaOH, Na₂SO₄, NaAl(OH)₄ und/oder Na₂CO₃ und Alkalimetallate der Elemente der 6. und/oder 7. Nebengruppe des Periodensystems;
   - eine feste metallische Phase, bestehend aus der Gruppe der Metalle Co, Ni, Fe, Mn , und Cr;
   - eine feste Phase, bestehend aus Hydroxiden und/oder Oxidhydraten der Metalle der 3. Hauptgruppe und der Metalle der 4. und/oder 5. Nebengruppe des Periodensystems,
d) Abtrennung der wässrigen Fraktion durch Filtration,
e) Trennung der wasserunlöslichen Fraktion durch magnetische Abscheidung metallischer Komponenten,
f) Abtrennung der oxidischen Fraktion.

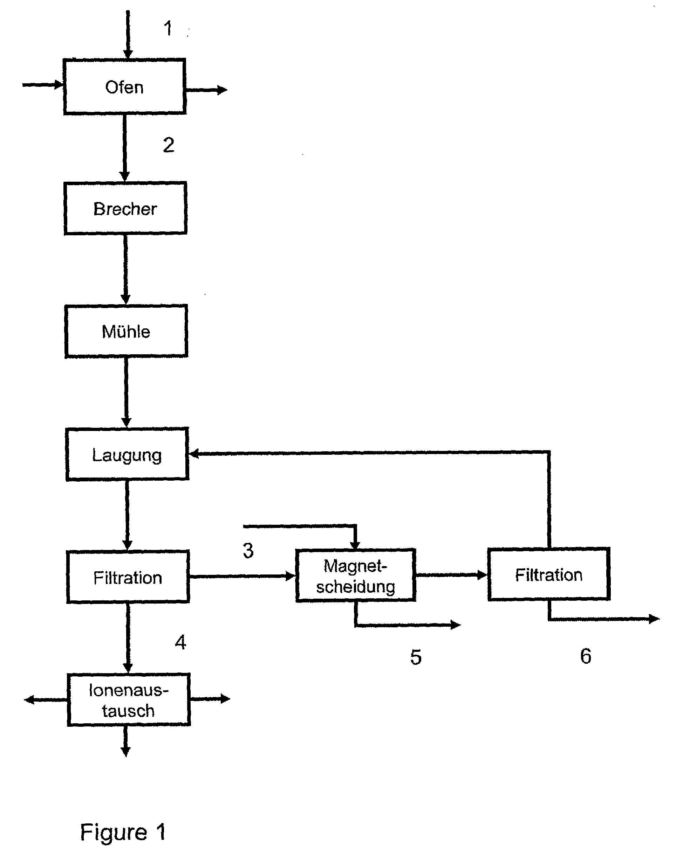

Das erfindungsgemäße Verfahren ist in der beigefügten Fig. 1 schematisch dargestellt. Gemäß Fig 1. wird der Superlegierungsschmelzaufschluss (2) nach der Abkühlung auf Raumtemperatur gebrochen, danach in einer Mühle zerkleinert und anschließend in Wasser gelaugt. Bevorzugt wird die Laugung bei Temperaturen von kleiner 60°C und besonders bevorzugt bei kleiner 40°C durchgeführt. Das Besondere des Schmelzaufschlusses sind die darin bereits vorgebildeten drei Fraktionen, die während der Wasserlaugung als leicht zu trennende Fraktionen (vorliegen):
- Das Filtrat (4), welches im Wesentlichen die Elemente Molybdän, Wolfram und Rhenium in Form ihrer Alkalimetallate enthält,
- Der wasserunlösliche Rückstand (3), der aus einem magnetischen Anteil besteht, der praktisch die gesamten Nickel- und Cobaltanteile der Legierung und etwa 1/3 des eingesetzten Chroms in metallischer Form enthält, während alle anderen Elemente nur als Nebenbestandteile oder im Spurenbereich vorliegen und
- einer nicht-magnetischen Fraktion (5), die die Elemente Aluminium, Chrom, Titan, Zirkonium, Hafnium, Niob und Tantal in Form ihrer Oxide (z.B. Al2O3, Cr2O3, TiO2, ZrO2, HfO2, Ta2O5, Nb2O5), oder Hydroxide (z.B. Al(OH)3, Cr(OH)3, Ti(OH)4, Zr(OH)4, Hfi(OH)4, Ta(OH)5, Nb(OH)5, oder Nitride (z.B. AlN, CrN, TiN, HfN, NbN, und TaN oder Carbide (z.B. AIC, Cr2C3, TiC, ZrC, HfC, NbC und TaC), enthält.

Die weitere Aufarbeitung dieser Fraktionen kann nach den bekannten Verfahren erfolgen. So kann das Rhenium nach der Filtration aus dem Filtrat (4) über stark basischen lonenaustauscher wie in DE 10155791 beschrieben abgetrennt werden. Die rheniumfreie, im wesentlichen Natiummolybdat und Natriumwolframat enthaltende Lösung, kann dem Prozess zur Gewinnung von Molybdän bzw. Wolfram hinzugefügt werden.
Der nicht-magnetische Rückstand, der bis zu 15% Tantal enthält, kann als Rohstoff in der Tantal-Metallurgie eingesetzt werden.
Der magnetische Rückstand wird vorteilhaft zur Herstellung von Cobalt und Nickel verwendet.
Das erfindungsgemäße Verfahren eignet sich insbesondere zur Rückgewinnung von Rhenium aus Superlegierungen. Der Gegenstand der vorliegenden Erfindung ist weiterhin ein Verfahren zur Gewinnung von Rhenium aus Superlegierungen enthaltend folgende Schritte:
a) Aufschluss von Superlegierungen in einer Salzschmelze bestehend aus 60-95 Gew. % NaOH und 5-40 Gew. % Na₂SO₄,
b) Abkühlung der Schmelze auf Raumtemperatur,
c) Zerkleinerung des Schmelzaufschlusses,
d) Umsetzung des zerkleinerten Schmelzaufschlusses in Wasser bei Temperaturen von kleiner 80°C und Erzeugung einer wässrigen Suspension enthaltend
   - eine Lösung, bestehend aus einer Mischung von Natriumverbindungen aus der Gruppe NaOH, Na₂SO₄, NaAl(OH)4 und/oder Na₂CO₃ und Alkalimetallate der Elemente der 6. und/oder 7. Nebengruppe des Periodensystems;
   - eine feste metallische Phase, bestehend aus der Gruppe der Metalle Co, Ni, Fe, Mn , und Cr;
   - eine feste Phase, bestehend aus Hydroxiden und/oder Oxidhydraten der Metalle der 3. Hauptgruppe und der Metalle der 4. und/oder 5. Nebengruppe des Periodensystems,
e) Abtrennung der wässrigen Fraktion durch Filtration,
f) Abtrennung des Rheniums aus der wässrigen Fraktion gemäß DE 10155791.

Das erfindungsgemäße Verfahren zur Gewinnung von Rhenium aus Superlegierungen wird vorteilhaft so durchgeführt, dass in die Salzschmelze bis zu 10 Gew.%, bevorzugt bis zu 8 Gew.-% und besonders bevorzugt bis zu 5 % Soda (Na₂CO₃) bezogen auf das Gewicht der Salzschmelze hinzugefügt werden. Bevorzugt wird die Abtrennung des Rheniums aus der wässrigen Suspension mittels stark basischer Ionenaustauscherharze.
Ein Vorteil des erfindungsgemäßen Verfahrens besteht darin, dass der Superlegierungsaufschluss in einer NaOH-Na₂SO₄-Schmelze exotherm ist. Durch das Einleiten von Luft oder des Luft/Sauerstoff-Gemisches ist der Prozess gut steuerbar. Ein weiterer Vorteil besteht darin, dass die Wertstoffe nahezu vollständig zurück gewonnen werden können.
Die Erfindung wird anhand des nachfolgenden Beispiels näher erläutert.

### Beispiel

In einem mit Erdgas direkt befeuerten Trommelofen wurden 1,97 t Superlegierungsschleifstaub (1) zusammen mit 2,50 t NaOH und 0,45 t Na₂SO₄ innerhalb von 4 Stunden auf 1110°C erhitzt und eine weitere Stunde bei dieser Temperatur belassen. Die Zusammensetzung des Superlegierungsschleifstaubes ist in Tabelle 1 aufgeführt.
Danach wurde der entstandene dickflüssige Superlegierungs-Schmelzaufschluss vollständig aus dem Ofen abgegossen. Die erkaltete Schmelze wurde zunächst grob gebrochen und anschließend auf <2 mm vermahlen. Man erhielt 5,26 t pulverförmiges Schmelzgut (2), das zur Laugung in 7,5 m³ Wasser eingerührt wurde. Nach beendeter Zugabe wurde noch 2 Stunden weitergerührt und dann über eine Filterpresse filtriert und mit 0,5 m³ Wasser nachgewaschen. Man erhielt 2,10 t Filterrückstand (3) und 9,3 m³ Filtrat (4). Der Filterkuchen wurde erneut in Wasser suspendiert und die metallischen, magnetischen Anteile durch Pumpen der Suspension im Kreislauf durch einen Magnetabscheider von den oxidischen und hydroxidischen Anteilen getrennt. Die weitgehend metallfreie Suspension wurde anschließend wieder über eine Filterpresse abgetrennt, die Filtrate für den nächsten Laugungsansatz vorgelegt. Man erhielt 1,46 t Metallschlamm (5) und 0,56 t Hydroxidschlamm (6). Der Hydroxidschlamm (6) wurde zur Wiedergewinnung des Tantals an einen Tantalbetrieb, der Metallschlamm (5) zur weiteren Aufarbeitung an einen Nickelbetrieb weitergegeben. Das rheniumhaltige Filtrat (3) wurde über Ionenaustauschersäulen mit stark basischem Ionenaustauscher geleitet um das Rhenium zurück zu gewinnen. Die weitere Anreicherung und Reinigung des Rheniums erfolgte nach Standardmethoden gemäß dem Stand der Technik. Der rheniumfreie Ablauf der Ionenaustauschersäulen wurde in einem Wolframbetrieb als Vorlage für die Laugung von WO₃ genutzt. Die Rhenium-Ausbeute betrug dabei 94 %.
Die Zusammensetzung des Superlegierungsschleifstaubs sowie der wichtigsten Zwischenprodukte kann der Tabelle 3 entnommen werden.

**Tabelle 3**

| | % | kg | % | kg | % | kg | g/L | kg | % | kg | % | kg |
|---|---|---|---|---|---|---|---|---|---|---|---|---|
| Al | 9,28 | 183 | 4,47 | 235 | 1,46 | 30,5 | 21,9 | 204 | 0,12 | 1,7 | 5,05 | 28,4 |
| Co | 7,09 | 140 | 2,59 | 136 | 6,73 | 141 | 0,0 | 0,0 | 9,46 | 138 | 0,37 | 2,1 |
| Cr | 7,17 | 141 | 2,62 | 138 | 6,69 | 140 | 0,0 | 0,0 | 3,16 | 46,2 | 16,4 | 92,7 |
| Hf | 0,22 | 4,4 | 0,08 | 4,3 | 0,21 | 4,3 | 0,0 | 0,0 | 0,09 | 1,4 | 0,52 | 2,9 |
| Mo | 1,05 | 20,6 | 0,39 | 20,4 | 0,01 | 0,1 | 2,21 | 20,5 | 0,01 | 0,1 | 0,0 | 0,0 |
| Ni | 51,3 | 1001 | 19,0 | 999 | 47,9 | 1000 | 0,0 | 0,0 | 68,8 | 1006 | 3,14 | 17,7 |
| Re | 1,53 | 30,1 | 0,58 | 30,5 | 0,09 | 1,9 | 3,12 | 29,0 | 0,13 | 1,8 | 0,01 | 0,0 |
| Ta | 4,20 | 82,8 | 1,55 | 81,3 | 3,93 | 82,0 | 0,0 | 0,0 | 1,94 | 28,4 | 9,55 | 53,8 |
| Ti | 1,53 | 30,2 | 0,58 | 30,5 | 1,47 | 30,6 | 0,0 | 0,0 | 0,68 | 10,0 | 3,59 | 20,2 |
| W | 4,38 | 86,2 | 1,64 | 86,1 | 0,04 | 0,9 | 9,16 | 85,3 | 0,06 | 0,9 | 0,0 | 0,0 |
| Zr | 2,33 | 45,9 | 0,87 | 45,5 | 2,15 | 45 | 0,0 | 0,0 | 0.97 | 14,3 | 5,5 | 31,0 |
| Nichtmetallische Bestandteile | 9,92 | | | | | | | | | | | |
| Summe Metalle | 90,08 | 1775 | | 1807 | | 1476 | | 339 | | 1249 | | 249 |

## Patentansprüche

1. Verfahren zur Rückgewinnung von Wertmetallen aus Superlegierungen wobei die Superlegierungen in einer Salzschmelze bestehend aus 60-95 Gew.% NaOH und 5-40 Gew.% Na₂SO₄ aufgeschlossen werden, wobei Superlegierungen als Hauptkomponente eines oder mehrere der Metalle aus der Gruppe, Ni, Co, Cr oder Al und als Nebenkomponente eines oder mehrere der Elemente aus der Gruppe Re, Mo, Ta, Nb, W, Hf oder Pt enthält, wobei in der Schmelze drei Fraktionen bestehend aus
- in Wasser löslichen Alkalioxometallaten der Metalle der 6. und/oder 7.
Nebengruppe und/oder der 3. Hauptgruppe des Periodensystems und/oder deren Mischungen;
- in Wasser unlöslichen Komponenten aus der Gruppe
der Metalle Co, Ni, Fe, Mn oder Cr und oder deren Mischungen;
- Oxiden und/oder in Wasser unlöslichen Alkalioxometallate der Metalle der 4.
oder 5. Nebengruppe des Periodensystems und/oder deren Mischungen vorgebildet werden.

2. Verfahren nach Anspruch 1, **dadurch gekennzeichnet, dass** in die Salzschmelze bis zu 10 Gew.% Soda zugegeben werden.

3. Verfahren nach Anspruch 2, **dadurch gekennzeichnet, dass** die Salzschmelze 75-90 Gew.% NaOH, 5-20 Gew.% Na₂SO₄ und/oder 5-10 Gew.% Soda enthält.

4. Verfahren nach einem der Ansprüche 1 bis 3, **dadurch gekennzeichnet, dass** die Superlegierung 0,5 bis 12 Gew. % Rhenium enthält.

5. Verfahren nach einem der Ansprüche 1 bis 4, **dadurch gekennzeichnet, dass** auf 1 kg Superlegierung mindestens 1 kg Salzschmelze eingesetzt wird.

6. Verfahren nach Anspruch 1 oder 5, **dadurch gekennzeichnet, dass** der Aufschluss in einer bewegten Schmelze durchgeführt wird.

7. Verfahren nach einem der Ansprüche 1 bis 6, **dadurch gekennzeichnet, dass** der Aufschluss in einem chargenweise oder kontinuierlich betriebenen Drehrohrofen durchgeführt wird.

8. Verfahren nach einem der Ansprüche 1 bis 8, **dadurch gekennzeichnet, dass** in die Schmelze Luft und/oder Sauerstoff, oder deren Gemisch eingeleitet wird.

9. Verfahren nach einem der Ansprüche 1 bis 9, **dadurch gekennzeichnet, dass** in die Schmelze oxidierende Komponenten aus der Gruppe der Verbindungen Nitrate, Peroxodisulfate, Peroxide der Alkalimetalle und/oder deren Mischungen hinzugefügt werden.

10. Verfahren nach Anspruch 9, **dadurch gekennzeichnet, dass** in die Schmelze 5 bis 25 Gew. % der oxidierenden Komponente bezogen auf die Salzschmelze hinzugefügt werden.

11. Verfahren nach Anspruch 8, **dadurch gekennzeichnet, dass** in die Schmelze ein Gemisch aus Luft und Sauerstoff bestehend aus 25 bis 95 Vol.-% Luft und 5 bis 75 Vol.-% Sauerstoff eingeleitet wird.

12. Verfahren nach einem der Ansprüche 9 bis 11, **dadurch gekennzeichnet, dass** der Aufschluss bei Temperaturen von 800 bis 1200 °C durchgeführt wird.

13. Verfahren nach einem der Ansprüche 9 bis 12, **dadurch gekennzeichnet, dass** die Superlegierungen partiell oxidiert werden.

14. Verfahren zur Rückgewinnung von Wertmetallen aus Superlegierungen enthaltend folgende Schritte:
a) Überführung des Schmelzaufschlusses nach Anspruch 1 in feste Phase durch Abkühlung auf Raumtemperatur,
b) Zerkleinerung des erstarrten Schmelzaufschlusses,
c) Umsetzung des zerkleinerten Schmelzaufschlusses in Wasser bei Temperaturen von kleiner 80°C und Erzeugung einer wässrigen Suspension enthaltend
- eine Lösung, bestehend aus einer Mischung von Natriumverbindungen aus der Gruppe NaOH, Na₂SO₄, NaAl(OH)₄ und/oder Na₂CO₃ und Alkalimetallate der Elemente der 6. und/oder 7. Nebengruppe des Periodensystems;
- eine feste metallische Phase, bestehend aus der Gruppe der Metalle Co, Ni, Fe, Mn , und Cr;
- eine feste Phase, bestehend aus Hydroxiden und/oder Oxidhydraten der Metalle der 3. Hauptgruppe und der Metalle der 4. und/oder 5. Nebengruppe des Periodensystems,
d) Abtrennung der wässrigen Fraktion durch Filtration
e) Trennung der wasserunlöslichen Fraktion durch magnetische Abscheidung metallischer Komponenten,
f) Abtrennung der oxidischen Fraktion.

15. Verfahren nach Anspruch 14, **dadurch gekennzeichnet, dass** die Umsetzung des Schmelzaufschlusses in Wasser bei Temperaturen von kleiner 60°C durchgeführt wird.

16. Verfahren nach Anspruch 15, **dadurch gekennzeichnet, dass** die Umsetzung des Schmelzaufschlusses in Wasser bei Temperaturen von kleiner 40°C durchgeführt wird.

17. Verfahren zur Gewinnung von Rhenium aus Superlegierungen bestehend aus folgenden Schritten:
a) Aufschluss von Superlegierungen in einer Salzschmelze bestehend aus 60-95 Gew. % NaOH und 5-40 Gew. % Na₂SO₄,
b) Abkühlung der Schmelze auf Raumtemperatur,
c) Zerkleinerung des Schmelzaufschlusses,
d) Umsetzung des zerkleinerten Schmelzaufschlusses in Wasser bei Temperaturen von kleiner 80°C und Erzeugung einer wässrigen Suspension enthaltend
- eine Lösung, bestehend aus einer Mischung von Natriumverbindungen aus der Gruppe NaOH, Na₂SO₄, NaAl(OH)₄ und/oder Na₂CO₃ und Alkalimetallate der Elemente der 6. und/oder 7. Nebengruppe des Periodensystems;
- eine feste metallische Phase, bestehend aus der Gruppe der Metalle Co, Ni, Fe, Mn , und Cr;
- eine feste Phase, bestehend aus Hydroxiden und/oder Oxidhydraten der Metalle der 3. Hauptgruppe und der Metalle der 4. und/oder 5. Nebengruppe des Periodensystems,
e) Abtrennung der wässrigen Fraktion durch Filtration,
f) Abtrennung des Rheniums aus der wässrigen Fraktion.

18. Verfahren nach Anspruch 17, **dadurch gekennzeichnet, dass** in die Salzschmelze bis zu 10 Gew.-% Soda zugegeben werden.

19. Verfahren nach einem der Ansprüche 1 bis 18, **dadurch gekennzeichnet, dass** die Superlegierungen Superlegierungsschrotte sind.

## Claims

1. Process for recovering valuable metals from superalloys, wherein the superalloys are digested in a salt melt consisting of 60-95% by weight of NaOH and 5-40% by weight of Na₂SO₄, wherein superalloys contains one or more of the metals from the group consisting of Ni, Co, Cr or Al as main components and one or more of the elements from the group consisting of Re, Mo, Ta, Nb, W, Hf or Pt as secondary components, wherein three fractions consisting of
- water-soluble alkali metal oxometallates of the metals of the 6th and/or 7th subgroup and/or of the 3rd main group of the Periodic Table of the Elements and/or mixtures thereof;
- water-insoluble components from the group consisting of the metals Co, Ni, Fe, Mn or Cr and/or mixtures thereof;
- oxides and/or water-insoluble alkali metal oxometallates of the metals of the 4th or 5th subgroup of the Periodic Table of the Elements and/or mixtures thereof are pre-formed in the melt.

2. Process according to Claim 1, **characterized in that** up to 10% by weight of sodium carbonate are added to the salt melt.

3. Process according to Claim 2, **characterized in that** the salt melt contains 75-90% by weight of NaOH, 5-20% by weight of Na₂SO₄ and/or 5-10% by weight of sodium carbonate.

4. Process according to any of Claims 1 to 3, **characterized in that** the superalloy contains 0.5 to 12% by weight of rhenium.

5. Process according to any of Claims 1 to 4, **characterized in that** at least 1 kg of salt melt is used per 1 kg of superalloy.

6. Process according to Claim 1 or 5, **characterized in that** the digestion is carried out in a moving melt.

7. Process according to any of Claims 1 to 6, **characterized in that** the digestion is carried out in a rotary tubular kiln operated batchwise or continuously.

8. Process according to any of Claims 1 to 7, **characterized in that** air and/or oxygen or a mixture thereof is passed into the melt.

9. Process according to any of Claims 1 to 8, **characterized in that** oxidizing components from the group consisting of the compounds nitrates, peroxodisulphates, peroxides of the alkali metals and/or mixtures thereof are added to the melt.

10. Process according to Claim 9, **characterized in that** 5 to 25% by weight of the oxidizing component, based on the salt melt, are added to the melt.

11. Process according to Claim 8, **characterized in that** a mixture of air and oxygen consisting of 25 to 95% by volume of air and 5 to 75% by volume of oxygen is passed into the melt.

12. Process according to any of Claims 9 to 11, **characterized in that** the digestion is carried out at temperatures of 800 to 1200°C.

13. Process according to any of Claims 9 to 12, **characterized in that** the superalloys are partly oxidized.

14. Process for recovering valuable metals from superalloys, comprising the following steps:
a) conversion of the melt digestion product according to Claim 1 into the solid phase by cooling to room temperature,
b) comminution of the solidified melt digestion product,
c) reaction of the comminuted melt digestion product in water at temperatures of less than 80°C and production of an aqueous suspension containing
- a solution consisting of a mixture of sodium compounds from the group consisting of NaOH, Na₂SO₄, NaAl(OH)₄ and/or Na₂CO₃ and alkali metallates of the elements of the 6th and/or 7th subgroups of the Periodic Table of the Elements;
- a solid metallic phase consisting of the group of metals Co, Ni, Fe, Mn and Cr;
- a solid phase consisting of hydroxides and/or hydrated oxides of the metals of the 3rd main group and of metals of the 4th and/or 5th subgroup of the Periodic Table of the Elements,
d) removal of the aqueous fraction by filtration,
e) separation of the water-insoluble fraction by magnetic deposition of metallic components,
f) removal of the oxidic fraction.

15. Process according to Claim 14, **characterized in that** the reaction of the melt digestion product in water is carried out at temperatures of less than 60°C.

16. Process according to Claim 15, **characterized in that** the reaction of the melt digestion product in water is carried out at temperatures of less than 40°C.

17. Process for obtaining rhenium from superalloys, consisting of the following steps:
a) digestion of superalloys in a salt melt consisting of 60-95% by weight of NaOH and 5-40% by weight of Na₂SO₄,
b) cooling of the melt to room temperature,
c) comminution of the melt digestion product,
d) reaction of the comminuted melt digestion product in water at temperatures of less than 80°C and production of an aqueous suspension containing
- a solution consisting of a mixture of sodium compounds from the group consisting of NaOH, Na₂SO₄, NaAl(OH)₄ and/or Na₂CO₃ and alkali metallates of the elements of the 6th and/or 7th subgroup of the Periodic Table of the Elements;
- a solid metallic phase consisting of the group of metals Co, Ni, Fe, Mn and Cr;
- a solid phase consisting of hydroxides and/or hydrated oxides of the metals of the 3rd main group and of metals of the 4th and/or 5th subgroup of the Periodic Table of the Elements,
e) removal of the aqueous fraction by filtration,
f) removal of the rhenium from the aqueous fraction.

18. Process according to Claim 17, **characterized in that** up to 10% by weight of sodium carbonate are added to the salt melt.

19. Process according to any of Claims 1 to 18, **characterized in that** the superalloys are superalloy scrap.

## Revendications

1. Procédé de récupération de métaux de valeur à partir de superalliages, les superalliages étant dissociés dans une masse fondue saline constituée de 60 à 95% en poids de NaOH et 5 à 40% en poids de Na₂SO₄, les superalliages contenant en tant que composant principal un ou plusieurs des métaux du groupe Ni, Co, Cr ou Al, et en tant que composant secondaire un ou plusieurs des éléments du groupe Re, Mo, Ta, Nb, W, Hf ou Pt, trois fractions constituées par
- des oxométallates alcalins solubles dans l'eau des métaux du groupe de transition 6 et/ou 7 et/ou du groupe principal 3 du tableau périodique et/ou leurs mélanges ;
- des composants insolubles dans l'eau du groupe des métaux Co, Ni, Fe, Mn ou Cr et/ou leurs mélanges ;
- des oxydes et/ou des oxométallates alcalins insolubles dans l'eau des métaux du groupe de transition 4 ou 5 du tableau périodique et/ou leurs mélanges
étant préformés dans la masse fondue.

2. Procédé selon la revendication 1, **caractérisé en ce que** jusqu'à 10% en poids de soude sont ajoutés dans la masse fondue saline.

3. Procédé selon la revendication 2, **caractérisé en ce que** la masse fondue saline contient 75 à 90% en poids de NaOH, 5 à 20% en poids de Na₂SO₄ et/ou 5 à 10% en poids de soude.

4. Procédé selon l'une quelconque des revendications 1 à 3, **caractérisé en ce que** le superalliage contient 0,5 à 12% en poids de rhénium.

5. Procédé selon l'une quelconque des revendications 1 à 4, **caractérisé en ce qu'**au moins 1 kg de masse fondue saline est utilisé pour 1 kg de superalliage.

6. Procédé selon la revendication 1 ou 5, **caractérisé en ce que** la dissociation est réalisée dans une masse fondue agitée.

7. Procédé selon l'une quelconque des revendications 1 à 6, **caractérisé en ce que** la dissociation est réalisée dans un four rotatif exploité de manière discontinue ou continue.

8. Procédé selon l'une quelconque des revendications 1 à 7, **caractérisé en ce que** de l'air et/ou de l'oxygène, ou leur mélange, est introduit dans la masse fondue.

9. Procédé selon l'une quelconque des revendications 1 à 8, **caractérisé en ce que** des composants oxydants du groupe des composés nitrates, peroxodisulfates, peroxydes des métaux alcalins et/ou leurs mélanges sont ajoutés dans la masse fondue.

10. Procédé selon la revendication 9, **caractérisé en ce que** 5 à 25 % en poids du composant oxydant par rapport à la masse fondue saline sont ajoutés dans la masse fondue.

11. Procédé selon la revendication 8, **caractérisé en ce qu'**un mélange d'air et d'oxygène constitué de 25 à 95 % en volume d'air et 5 à 75 % en volume d'oxygène est introduit dans la masse fondue.

12. Procédé selon l'une quelconque des revendications 9 à 11, **caractérisé en ce que** la dissociation est réalisée à des températures de 800 à 1 200 °C.

13. Procédé selon l'une quelconque des revendications 9 à 12, **caractérisé en ce que** les superalliages sont partiellement oxydés.

14. Procédé de récupération de métaux de valeur à partir de superalliages, contenant les étapes suivantes :
a) le transfert du produit dissocié par fusion selon la revendication 1 en phase solide par refroidissement à température ambiante,
b) le broyage du produit dissocié par fusion figé,
c) la mise en réaction du produit dissocié par fusion broyé dans de l'eau à des températures inférieures à 80 °C et la formation d'une suspension aqueuse contenant
- une solution constituée d'un mélange de composés de sodium du groupe NaOH, Na₂SO₄, NaAl(OH)₄ et/ou Na₂CO₃ et de métallates alcalins des éléments du groupe de transition 6 et/ou 7 du tableau périodique ;
- une phase métallique solide constituée du groupe des métaux Co, Ni, Fe, Mn et Cr,
- une phase solide constituée d'hydroxydes et/ou d'oxyhydrates des métaux du groupe principal 3 et des métaux du groupe de transition 4 et/ou 5 du tableau périodique,
d) la séparation de la fraction aqueuse par filtration,
e) la séparation de la fraction insoluble dans l'eau par précipitation magnétique des composants métalliques,
f) la séparation de la fraction oxydique.

15. Procédé selon la revendication 14, **caractérisé en ce que** la réaction du produit dissocié par fusion dans de l'eau est réalisée à des températures inférieures à 60 °C.

16. Procédé selon la revendication 15, **caractérisé en ce que** la réaction du produit dissocié par fusion dans de l'eau est réalisée à des températures inférieures à 40 °C.

17. Procédé de récupération de rhénium à partir de superalliages constitué par les étapes suivantes :
a) la dissociation de superalliages dans une masse fondue saline constituée de 60 à 95 % en poids de NaOH et 5 à 40 % en poids de Na₂SO₄,
b) le refroidissement de la masse fondue à température ambiante,
c) le broyage du produit dissocié par fusion,
d) la mise en réaction du produit dissocié par fusion broyé dans de l'eau à des températures inférieures à 80 °C et la formation d'une suspension aqueuse contenant
- une solution constituée d'un mélange de composés de sodium du groupe NaOH, Na₂SO₄, NaAl(OH)₄ et/ou Na₂CO₃ et de métallates alcalins des éléments du groupe de transition 6 et/ou 7 du tableau périodique ;
- une phase métallique solide constituée du groupe des métaux Co, Ni, Fe, Mn et Cr ;
- une phase solide constituée d'hydroxydes et/ou d'oxyhydrates des métaux du groupe principal 3 et des métaux du groupe de transition 4 et/ou 5 du tableau périodique,
e) la séparation de la fraction aqueuse par filtration,
f) la séparation du rhénium de la fraction aqueuse.

18. Procédé selon la revendication 17, **caractérisé en ce que** jusqu'à 10 % en poids de soude sont ajoutés dans la masse fondue saline.

19. Procédé selon l'une quelconque des revendications 1 à 18, **caractérisé en ce que** les superalliages sont des chutes de superalliage.
